# EUROPÄISCHE PATENTSCHRIFT

(11) **EP 1 726 242 B1**
(45) Veröffentlichungstag und Bekanntmachung des Hinweises auf die Patenterteilung: **22.07.2009**
(21) Anmeldenummer: 05104579.7
(22) Anmeldetag: 27.05.2005
(51) Int. Cl.: A47J 39/00, A47J 39/02

(54) **Einrichtung zum Warmhalten von auf einem Teller angerichteten Speisen**
Devive for holding food prepared on plates warm
Dispositif pour maintenir chaud des aliments préparés sur une assiette

(43) Veröffentlichungstag der Anmeldung: 29.11.2006
(73) Patentinhaber: Schmalz Distributions-Systeme AG, 2560 Nidau (CH)
(72) Erfinder: Schmalz, Beat, 2560, Nidau (CH)
(74) Vertreter: BOVARD AG

(56) Entgegenhaltungen:
- EP-A- 0 666 047
- EP-A- 0 818 169
- US-A- 4 182 405
- US-A- 4 246 884

## Beschreibung

### Technisches Gebiet

Die vorliegende Erfindung betrifft eine Einrichtung zum Warmhalten von auf einem Teller angerichteten Speisen.

### Stand der Technik

Zwischen dem Anrichten von Speisen auf einem Teller und dem Genuss dieser Speisen kann aus verschiedenen Gründen so viel Zeit vergehen, dass ohne entsprechende Massnahmen die Speisen vor dem Genuss erkalten und deswegen weniger gut geniessbar sind. Insbesondere in Spitälern kann die Zeit zwischen dem Anrichten von Speisen und dem Genuss dieser Speisen beträchtlich sein. So kann es erforderlich sein, dass auf Tellern angerichtete Speisen während beispielsweise 90 Minuten auf einer Temperatur von mindestens 65° Celcius warm gehalten werden müssen. Für das Warmhalten von auf Tellern angerichteten Speisen ist im Stand der Technik die so genannte Cloche bekannt. Eine Cloche kann aus verschiedensten Materialien wie Kunststoff, Glas oder Metall hergestellt sein. Mittels der Cloche wird ein Teller mit angerichteten Speisen zugedeckt und das Abkühlen der Speisen wird dadurch wesentlich verlangsamt. Mit einer Cloche ist es jedoch nicht möglich, Speisen über längere Zeiträume, wie beispielsweise über 90 Minuten, genügend warm zu halten. Um auf Tellern angerichtete Speisen auch über eine längere Zeit warm halten zu können sind im Stand der Technik auch Warmhalteunterteile bekannt, welche zusammen mit einer Cloche verwendet werden. Ein Warmhalteunterteil kann beispielsweise einen Eisenkern umfassen, wobei der Eisenkern mittels einer Induktionsvorrichtung in relativ kurzer Zeit erhitzt wird und die danach in das Warmhalteunterteil abgegebene Energie zu einem verlängerten Warmhalten von auf Tellern angerichteten Speisen führt. Mit solchen Warmhalteunterteilen sind jedoch nur relativ kurze Warmhaltezeiten erzielbar, da die Wärmekapazität des Eisenkerns beschränkt ist. Mittels Induktion erhitzte Warmhalteunterteile können zudem eine sehr unregelmässige Temperaturverteilung aufweisen. Solche Warmhalteunterteile haben zudem den Nachteil, dass es zu einer Überhitzung des Tellers und damit zu einem Verbrennen von Speiseteilen kommen kann. Ein Warmhalteunterteil kann andererseits eine Füllung mit einem Material mit hoher Wärmekapazität, wie beispielsweise eine Wachsfüllung, umfassen. Solche Warmhalteunterteile haben den Vorteil, dass eine grosse Wärmespeicherwirkung zur Verfügung gestellt werden kann und relativ lange Warmhaltezeiten erzielbar sind. Es ist jedoch ein Nachteil, dass Warmhalteunterteile mit Materialen mit hohen Wärmekapazitäten über relativ lange Zeiträume, wie beispielsweise über mehrere Stunden, aufgeheizt werden müssen. Es ist auch ein Nachteil, dass diese Warmhalteunterteile relativ schwer sind. Es ist zudem ein Nachteil, dass diese Warmhalteunterteile an den Aussenflächen sehr heiss werden und damit eine Verbrennungsgefahr für das Bedienpersonal oder für den Endbenutzer besteht.

In der Patentanmeldung EP 0 818 169 wird ein Speisetablett offenbart. Das Speisetablett umfasst eine Induktionsspule. Vorzugsweise besitzt das Speisetablett einen mehrschichtigen Sandwichaufbau, wobei die Induktionsspule in das Material einer mittleren Schicht vollständig eingebettet ist. Die Induktionsspule ist vorzugsweise an einer Wechselstromquelle anschliessbar. Die Induktionsspule ist eingerichtet, um auf einem Geschirrteil angeordnete Speisen zu erwärmen, soweit das Geschirrteil mit einer metallischen Beschichtung angeordnet ist.

### Offenbarung der Erfindung

Es ist eine Aufgabe der vorliegenden Erfindung, eine neue Einrichtung zum Warmhalten von auf einem Teller angerichteten Speisen vorzuschlagen, welche Einrichtung nicht die Nachteile des Standes der Technik aufweist.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass eine Einrichtung zum Warmhalten von auf einem Teller angerichteten Speisen ein Warmhalteunterteil mit einer der Tellerunterseite angepassten Vertiefung zur Aufnahme des Tellers umfasst, und dass das Warmhalteunterteil einen in einer Isolation eingebetteten Induktionskern zur Aufnahme von mittels eines Induktionsheizgeräts induktiv übertragbarer Wärmeenergie umfasst. Eine solche Einrichtung hat insbesondere den Vorteil, dass der Induktionskern in kurzer Zeit auf eine bestimmbare Temperatur wie beispielsweise zwischen 150° - 250° Celcius erwärmbar ist und es durch die um den Induktionskern angeordnete Isolation weder zu einer Überhitzung des Tellers, noch zu einer Überhitzung des Warmhalteunterteils kommt. Zudem weist die Isolation zur Einbettung des Induktionskerns gegenüber der Bodenseite des Warmhalteunterteils eine geringere Wärmeleitfähigkeit auf als gegenüber der Tellerseite des Warmhalteunterteils. Dies kann beispielsweise durch eine entsprechende Ausgestaltung der Isolationsdicken gegenüber der Bodenseite bzw. gegenüber der Tellerseite des Warmhalteunterteils erzielt werden. Eine solche Ausführungsvariante hat den Vorteil, dass für eine bestimmbare Temperatur des Induktionskerns und durch eine geeignete Wahl eines Isolationsmaterials die an der Bodenseite bzw. an der Tellerseite herrschende Temperatur auf bestimmbare Werte einstellbar ist.

In einer Ausführungsvariante besteht das Warmhalteunterteil aus einer äusseren Halbschale und einer inneren Halbschale. Eine solche Ausführungsvariante hat insbesondere den Vorteil, dass das Warmhalteunterteil kostengünstig, stabil sowie leicht herstellbar ist und über eine gute Isolationswirkung zwischen der für die Aufnahme des Tellers angepassten Vertiefung und dem Aussenraum des Warmhalteunterteils verfügt.

In einer anderen Ausführungsvariante besteht zwischen der äusseren Halbschale und der inneren Halbschale ein mit Isolationsmaterial füllbarer Zwischenraum. Eine solche Ausführungsvariante hat insbesondere den Vorteil, dass sich die Isolationswirkung mittels der Wahl von bestimmbaren Materialien auf bestimmbare Werte einstellen lässt.

In einer weiteren Ausführungsvariante besteht der Induktionskern aus mindestens zwei Materialien. Eine solche Ausführungsvariante hat insbesondere den Vorteil, dass im Induktionskern ein erstes Material angebracht werden kann, welches insbesondere für die Übertragung der Induktionsenergie geeignet ist, und dass im Induktionskern ein zweites Material angebracht werden kann, welches insbesondere für die gleichmässige Wärmeverteilung geeignet ist.

In einer anderen Ausführungsvariante besteht der Induktionskern aus einem Aluminiumkern mit einem einseitig oder beidseitig angebrachten Chromstahl-Blech. Eine solche Ausführungsvariante hat insbesondere den Vorteil, dass der Induktionskern sowohl eine schnelle Aufnahme von Induktionsenergie, als auch eine gleichmässige Wärmeverteilung aufweist und kostengünstig herstellbar ist.

In einer Ausführungsvariante umfasst der Induktionskern ein Material mit einem bestimmbaren Curie-Punkt. Eine solche Ausführungsvariante hat insbesondere den Vorteil, dass keine weitere Induktionsenergie an das Material übertragen wird, sobald die Temperatur des Materials den Curie-Punkt erreicht hat. Somit wird eine Überhitzung des Induktionskerns ausgeschlossen. Eine aufwendige Überwachung der Temperatur des Induktionskerns, wie beispielsweise eine Infrarotüberwachung, oder ein mehrmaliges Aufwärmen mittels des Induktionsheizgeräts sind damit nicht notwendig

In einer weiteren Ausführungsvariante besteht die Isolation zur Einbettung des Induktionskerns aus mindestens zwei Materialien. Eine solche Ausführungsvariante hat den Vorteil, dass die an der Bodenseite bzw. an der Tellerseite herrschende Temperatur noch genauer auf bestimmbare Werte einstellbar ist.

In einer anderen Ausführungsvariante ist das Warmhalteunterteil mit einem entsprechenden über eine Fugenverbindung verbindbaren Warmhalteoberteil abdeckbar. Eine solche Ausführungsvariante hat insbesondere den Vorteil, dass auf dem Teller angerichteten Speisen mittels einer einfach anbringbaren Vorrichtung über einen noch längeren Zeitraum warm gehalten werden können.

In einer weiteren Ausführungsvariante besteht das Warmhalteoberteil aus einer äusseren Halbschale und einer inneren Halbschale mit einem mit Isolationsmaterial füllbaren Zwischenraum zwischen der äusseren und der inneren Halbschale. Eine solche Ausführungsvariante hat den Vorteil, dass durch eine geeignete Wahl von Isolationsmaterialien die auf dem Teller - angerichteten Speisen über einen noch längeren Zeitraum warm gehalten werden können.

In einer anderen Ausführungsvariante ist die dem Teller zugewandet Innenseite des Warmhalteoberteils mit einer metallischen Schicht versehen. Eine solche Ausführungsvariante hat den Vorteil, dass die auf dem Teller angerichteten Speisen durch die Reflexion von Wärmestrahlen an der metallischen Schicht über eine wiederum noch längere Zeit warm gehalten werden können.

### Kurze Beschreibung der Zeichnung

Nachfolgend werden Ausführungsvarianten der vorliegenden Erfindung anhand von Beispielen beschrieben. Die Beispiele der Ausführungen werden durch folgende beigelegte Figur illustriert:

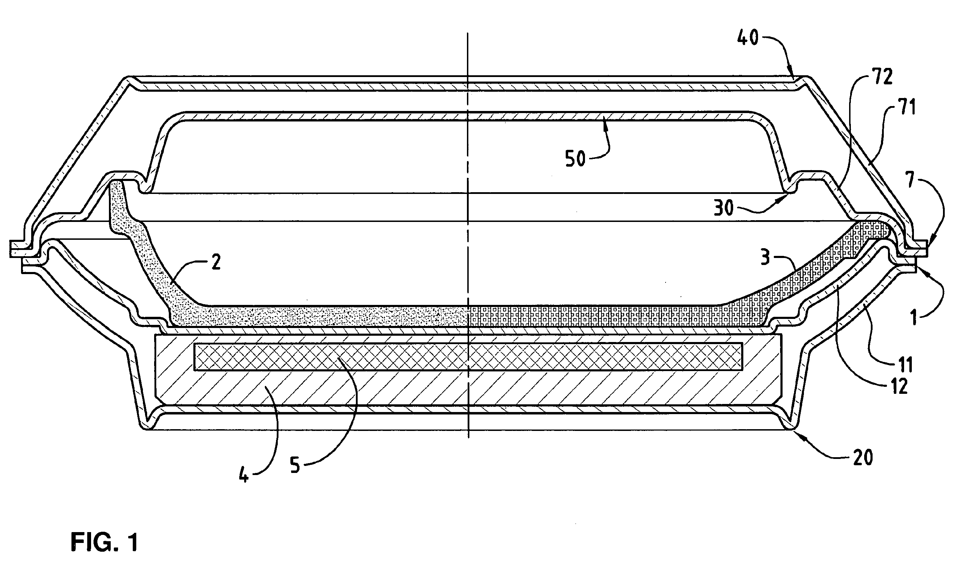

Figur 1 zeigt einen Querschnitt einer erfindungsgemässen Einrichtung.

### Ausführungsform(en) der Erfindung

In Figur 1 bezieht sich das Bezugszeichen 1 auf ein Warmhalteunterteil. Das Warmhalteunterteil 1 besteht aus einer äusseren Halbschale 11 und aus einer inneren Halbschale 12. Die äussere Halbschale 11 und die innere Halbschale 12 können aus linearem Polyphenylensulfid (PPS), Polybutylentherphtalat (PBTP), Polycarbonattherphtalat (PCT), flüssig kristallinen Kunststoffen (LCP) oder Polyphenylenoxid/Polyamid 6 / 6.6.-Blend (PPO/PA) - alle Werkstoffe werden zwecks Wärmeformbeständigkeit mit 30% Kurzglasfasern verstäkt - mit einer Dicke von beispielsweise 2 mm hergestellt sein. Zwischen der äusseren Halbschale 11 und der inneren Halbschale 12 besteht ein Zwischenraum. Der Zwischenraum kann mit Isolationsmaterial wie beispielsweise PU-Schaum (Polyurethanschaum) gefüllt sein. Entscheidend für eine optimale thermische Isolation, ist das Raumgewicht, das bei 50 bis 80 kg/m3 liegen sollte.

In Figur 1 bezieht sich das Bezugszeichen 2 auf einen Suppenteller oder eine Eintopf-Schale, und das Bezugszeichen 3 bezieht sich auf einen Speiseteller. Es kann entweder der Suppenteller 2 oder der Speiseteller 3 in einer der Tellerunterseite angepassten Vertiefung des Warmhalteunterteils angebracht sein. Im Suppenteller 2 oder im Speiseteller 3 können warme Speisen angerichtet sein, welche warm gehalten werden sollen.

In Figur 1 bezieht sich das Bezugszeichen 4 auf eine Isolation zur Einbettung eines Induktionskerns 5. Auf der Tellerseite des Warmhalteunterteils besteht die Isolation beispielsweise aus einer 2 mm dicken Rondelle aus Hochtemperaturisolationswerkstoffen mit einer Wärmeleitfähigkeit von 0.03 W/mK. Auf der Bodenseite des Warmhalteunterteils besteht die Isolation beispielsweise aus einer 10 mm dicken Rondelle aus Hochtemperaturisolationswerkstoff mit einer Wärmeleitfähigkeit von 0.03 W/mK. Stirnseitig ist der Induktionskern 5 beispielsweise lediglich mit Haltenocken so distanziert, dass keine vollflächige Berührung des heissen Wärmekerns mit dem Kunststoff erfolgt, sodass beispielsweise gegenüber der äusseren Halbschale 11 ringsum ein Luftspalt von 1-2 mm besteht. Alternativ können als stirnseitige Isolation beispielsweise zwei Ringe aus Keramikfaserpapier angebracht sein.

Der Induktionskern 5 besteht beispielsweise aus einem Aluminiumkern mit einer Dicke von 1 - 15 mm, auf welchem beidseitig ein 0.5 - 2 mm mm dickes Chromstahl-Blech der Werkstoff-Nr. 1.4016 angebracht ist.

Die erwähnten Materialien und weitere verwendbare Materialien haben folgende Materialeigenschaften:
PPO/PP-Blend Tₘₐₓ +125° C, Wärmeleitfähigkeit 0.4 W/mK
PPO/PA-Blend Tₘₐₓ +220° C, Wärmeleitfähigkeit 0.4 W/mK
PPS Tₘₐₓ +240° C, Wärmeleitfähigkeit 0.3 W/mK
HT-Isolation Tₘₐₓ +1425° C, Wärmeleitfähigkeit 0.03 W/mK, RG 192 kg/m³
PU-Schaum Tₘₐₓ +140° C, Wärmeleitfähigkeit 0.03 W/mK, RG 60 gr/cm³

Auch Kunststoffe wie z.B. PBTP, PCT, LCP oder PPS mit einer erhöhten thermischen Beständigkeit sind für die Herstellung des Warmhalteunterteils bzw. Warmhalteoberteils denkbar.

Erfindungsgemäss wird der Induktionskern mittels einer Induktionsheizvorrichtung auf eine bestimmbare Temperatur erwärmt. Eine solche Erwärmung kann mittels einer Induktionsvorrichtung, welche eine Leistung von beispielsweise 5-15 kW aufweist, innerhalb von 10 bis 15 Sekunden erfolgen. Die erzielbare Temperatur des Induktionskerns beträgt beispielsweise 150°- 250° C. Eine solche Erwärmung des Induktionskerns kann beispielsweise zusammen mit dem Anrichten der Speisen auf dem in dem Warmhalteunterteil angebrachten Teller erfolgen. Die Erwärmung des Induktionskerns führt somit zu keinerlei Verzögerung bei der Anrichtung von Speisen. Die Erwärmung des Induktionskerns führt zudem nur zu einem minimalen Energiemehrverbrauch.

Durch die geeignete Wahl von Isolationsmaterialien kann die in den Induktionskern eingebrachte Wärmeenergie nicht unkontrolliert entweichen und zu einer unkontrollierten Erwärmung des Tellers und somit einem Verbrennen von Speisen auf dem Teller oder zu einer unkontrollierten Erwärmung der Unterseite des Warmhalteunterteils und somit zu einer Verletzungsgefahr für Personen, die mit einem erwärmten Warmhalteunterteil hantieren, führen. Bei der kontrollierten Abgabe der im Induktionskern eingebrachten Wärmeenergie spielt insbesondere auch das Warmhalteoberteil sowie die verwendeten Geometrien eine Rolle. Experimente habe gezeigt, dass mittels einer in Figur 1 gezeigten relativen Geometrie eines Warmhalteunterteils eine Warmhaltung von auf einem Teller angerichteten Speisen derart ermöglicht wird, dass die Temperatur nie über 85° C steigt, und dass die Temperatur auch nach 90 Minuten noch mehr als 65° C beträgt.

Der Teller, auf dem die Speisen angeordnet sind, kann zudem so ausgestaltet sein, dass der Teller auf der Tellerunterseite nur auf einem schmalen Ring, welcher im Wesentlichen die gesamte Tellerunterseite umfasst, aufsteht. Der Ring ist beispielsweise so ausgeführt, dass zwischen der Tellerunterseite und der inneren Halbschale 12 des Warmhalteunterteils ein geschlossenes, mit Luft gefülltes Volumen von der Höhe von beispielsweise 1 - 5 mm entsteht. Dieses Luftvolumen führt zu einer zusätzlich optimierten Wärmeübertragung zwischen dem Induktionskern 5 und den auf dem Teller angebrachten Speisen.

In Figur 1 bezieht sich das Bezugszeichen 7 auf ein dem Warmhalteunterteil 1 entsprechendes Warmhalteoberteil. Das Warmhalteoberteil 7 kann aus einer inneren Halbschale 72 und aus einer äusseren Halbschale 71 bestehen. Die beiden Halbschalen können aus einem PPO/PP-Blend Noryl oder PA 6-3-T der Dicke 1 - 3 mm bestehen. Der Zwischenraum zwischen der inneren Halbschale 72 und der äusseren Halbschale 71 kann mit einem PU-Schaum ausgeschäumt sein. Die innere Halbschale 72 kann eine Tropfnase 30 zur Führung von Kondenswasser und zur Stabilisierung eines hochrandigen Tellers 2 umfassen. Die Innenseite 50 der Halbschale 72 kann zusätzlich eine Cr-Stahl Schicht der Dicke von beispielsweise 20 - 100 □m umfassen.

An dieser Stelle sei erwähnt, dass der Abstand zwischen der Oberseite des Tellers und der Innenseite des Warmhalteoberteils vorteilhafterweise gemäss den in Figur 1 gezeigten relativen Geometrien gewählt wird.

Der Induktionskern kann auch durch die Verwendung von mehreren relativ dünnen Kernen von beispielsweise 0.2 - 2 mm Dicke, welche beidseitig eine Induktionsschicht, wie beispielsweise eine Chromstahl-Schicht, aufweisen, gebildet werden. Die Kerne können aus verschiedenen Materialien bestehen, beispielsweise aus einem hitzebeständigen Kunststoff. Dabei können mehrere solche Kunststoffkerne in einer Art Sandwichbauweise aufeinander gestapelt werden und so sowohl genügend Volumen für die kurzfristige Speicherung von Wärmeenergie in den Kernen, als auch genügend Volumen für die Einkoppelung von Wärmeenergie über die Induktionsschichten zur Verfügung gestellt werden. Eine solche Bauweise hat insbesondere Vorteile bei einer relativ gleichmässigen und schnellen Übertragung von Wärmeenergie in einen Kunststoffkern.

Statt eines Induktionskerns kann auch ein Kältekern wie beispielsweise ein PE-Weichbeutel (PE: Polyethylen) mit einer Füllung aus eutektischem Kältemittel verwendet werden. Dabei wird aus dem Warmhalteunterteil ein Kalthalteunterteil. Das Kalthalteunterteil wird beispielsweise in einem Kühlschrank während einer bestimmbaren Zeit von beispielsweise zwölf Stunde auf eine Temperatur von -4° bis -21 ° Celsius abgekühlt. Auf einem Teller angerichtete Kaltspeisen können so über eine bestimmbare Zeit wie beispielsweise 90 Minuten auf einer bestimmbaren, maximal zulässigen Temperatur wie beispielsweise 8° Celsius gehalten werden.

Die innere Halbschale 12 und die äussere Halbschale 11 des Warmhalteunterteils 1 können luftdicht verbunden sein. Die im Innenraum eingeschlossene Luft dehnt sich bei der Erwärmung allerdings wesentlich aus, sodass im Innenraum beispielsweise eine Verdoppelung des Drucks entstehen kann. Eine solche Erhöhung des Drucks kann vorzugsweise über eine Druckausgleichsöffnung von beispielsweise 0.2 - 1 mm Durchmesser im Boden des Warmhalteunterteils abgeführt werden. Allerdings entsteht dabei das Problem, dass beim Waschen des Warmhalteunterteils Wasser in den Innenraum eindringen kann, welches auch nach einem langen Trocknungsprozess nur sehr schwierig aus dem Innenraum abführbar ist. Um das Eindringen von Wasser vorzubeugen, kann die Druckausgleichsöffnung mit einem Membran-Patch respektive einer halbdurchlässigen Membran versehen sein, wobei der Membran-Patch für Luft durchlässig ist und für ausserhalb des Warmhalteunterteils anliegendes Wasser undurchlässig ist. Im Stand der Technik sind verschiedene Materialien mit dieser Eigenschaft bekannt. Ein solcher Membran-Patch kann beispielsweise auf der Innenseite der äusseren Halbschale 11 angebracht werden.

## Patentansprüche

1. Einrichtung zum Warmhalten von auf einem Teller (2,3) angerichteten Speisen, umfassend ein Warmhalteunterteil (1) mit einer der Tellerunterseite angepassten Vertiefung zur Aufnahme des Tellers (2,3), **dadurch gekennzeichnet,**
**dass** das Warmhalteunterteil (1) einen in einer Isolation (4) eingebetteten Induktionskern (5) zur Aufnahme von mittels eines Induktionsheizgeräts induktiv übertragbarer Wärmeenergie umfasst und dass die Isolation (4) zur Einbettung des Induktionskerns (5) gegenüber der Bodenseite des Warmhalteunterteils eine geringere Wärmeleitfähigkeit aufweist, als gegenüber der Tellerseite des Warmhalteunterteils.

2. Einrichtung nach Anspruch 1, **dadurch gekennzeichnet, dass** das Warmhalteunterteil aus einer äusseren Halbschale (11) und einer inneren Halbschale (12) besteht.

3. Einrichtung nach Anspruch 2, **dadurch gekennzeichnet, dass** zwischen der äusseren Halbschale (11) und der inneren Halbschale (12) ein mit Isolationsmaterial füllbarer Zwischenraum besteht.

4. Einrichtung nach einem der Ansprüche 1 bis 3, **dadurch gekennzeichnet, dass** der Induktionskern (5) aus mindestens zwei Materialien besteht.

5. Einrichtung nach Anspruch 4, **dadurch gekennzeichnet, dass** der Induktionskern (5) aus einem Aluminiumkern mit einem einseitig oder beidseitig angebrachtem Chromstahl-Blech besteht.

6. Einrichtung nach einem der Ansprüche 1 bis 5, **dadurch gekennzeichnet, dass** der Induktionskern (5) ein Material mit einem bestimmbaren Curie-Punkt umfasst.

7. Einrichtung nach einem der Ansprüche 1 bis 6, **dadurch gekennzeichnet, dass** die Isolation (4) zur Einbettung des Induktionskerns (5) aus mindestens zwei Materialien besteht.

8. Einrichtung nach einem der Ansprüche 1 bis 7, **dadurch gekennzeichnet, dass** das Warmhalteunterteil (1) mit einem entsprechenden über eine Fugenverbindung verbindbaren Warmhalteoberteil (7) abdeckbar ist.

9. Einrichtung nach Anspruch 8, **dadurch gekennzeichnet, dass** das Warmhalteoberteil (7) aus einer äusseren Halbschale (11) und einer inneren Halbschale (12) mit einem mit Isolationsmaterial füllbaren Zwischenraum zwischen der äusseren und der inneren Halbschale besteht. ,

10. Einrichtung nach einem der Ansprüche 8 bis 9, **dadurch gekennzeichnet, dass** die dem Teller zugewandte Innenseite des Warmhalteoberteils (7) mit einer metallischen Schicht versehen ist.

11. Einrichtung nach einem der Ansprüche 1 bis 10, **dadurch gekennzeichnet, dass** die Stellfläche des Warmhalteunterteils aus einem geschlossenen, an der Unterseite des Warmhalteunterteils angebrachten Ring besteht.

## Claims

1. Device for keeping food arranged on a plate (2, 3) hot, comprising a lower part (1) for keeping food hot with a recess adapted to the plate lower side for receiving the plate (2, 3), **characterised**
**in that** the lower part (1) for keeping food hot comprises an induction core (5) embedded in insulation (4) for receiving thermal energy transferrable inductively by an induction heating device and in that the insulation (4) for embedding of the induction core (5) has a lower heat conductivity vis-à-vis the bottom side of the lower part for keeping food hot than vis-à-vis the plate side of the lower part for keeping food hot.

2. Device according to claim 1, **characterised in that** the lower part for keeping food hot consists of an outer half-shell (11) and an inner half-shell (12).

3. Device according to claim 2, **characterised in that** between the outer half-shell (11) and the inner half-shell (12) there exists an interim space fillable with insulation material.

4. Device according to one of the claims 1 to 3, **characterised in that** the induction core (5) is made up of at least two materials.

5. Device according to claim 4, **characterised in that** the induction core (5) consists of an aluminium core with a chrome steel sheeting provided on one side or both sides.

6. Device according to one of the claims 1 to 5, **characterised in that** the induction core (5) comprises a material with a Curie point which can be determined.

7. Device according to one of the claims 1 to 6, **characterised in that** the insulation (4) for embedding of the induction core (5) is made up of at least two materials.

8. Device according to one of the claims 1 to 7, **characterised in that** the lower part (1) for keeping food hot is able to be covered with a corresponding upper part (7) for keeping food hot connectible via a joint connection.

9. Device according to claim 8, **characterised in that** the upper part (7) for keeping food hot consists of an outer half-shell (11) and an inner half-shell (12) with an interim space fillable with insulation material between the outer and the inner half-shell.

10. Device according to one of the claims 8 to 9, **characterised in that** the inner side of the upper part (7) for keeping food hot turned toward the plate is provided with a metallic layer.

11. Device according to one of the claims 1 to 10, **characterised in that** the placement surface of the lower part (1) for keeping food hot consists of a closed ring provided on the lower side of the lower part (1) for keeping food hot.

## Revendications

1. Dispositif pour maintenir au chaud des repas préparés sur une assiette (2, 3), comprenant une partie inférieure chauffe-plat (1) avec une cavité adaptée à la face inférieure de l'assiette pour recevoir l'assiette (2, 3), **caractérisé en ce que**
la partie inférieure chauffe-plat (1) comprend un coeur d'induction (5) enrobé dans une isolation (4) pour recevoir l'énergie thermique transmise par induction au moyen d'un appareil de chauffage à induction et **en ce que** l'isolation (4) présente par rapport à la face de fond de la partie chauffe-plat pour l'enrobage du noyau à induction (5) une plus faible conductibilité thermique que celle par rapport à la face assiette de la partie inférieure chauffe-plat.

2. Dispositif selon la revendication 1, **caractérisé en ce que** la partie inférieure chauffe-plat se compose d'une demi-coque externe (11) et d'une demi-coque interne (12).

3. Dispositif selon la revendication 2, **caractérisé en ce qu'**entre la demi-coque externe (11) et la demi-coque interne (12), il existe un espace pouvant être rempli d'un matériau d'isolation.

4. Dispositif selon l'une des revendications 1 à 3, **caractérisé en ce que** le noyau à induction (5) se compose d'au moins deux matériaux.

5. Dispositif selon la revendication 4, **caractérisé en ce que** le noyau à induction (5) se compose d'un noyau en aluminium avec une tôle d'acier chromé placée unilatéralement ou bilatéralement.

6. Dispositif selon l'une des revendications 1 à 5, **caractérisé en ce que** le noyau à induction (5) comprend un matériau avec un point de Curie déterminable.

7. Dispositif selon l'une des revendications 1 à 6, **caractérisé en ce que** l'isolation (4) pour l'enrobage du noyau à induction (5) se compose d'au moins deux matériaux.

8. Dispositif selon l'une des revendications 1 à 7, **caractérisé en ce que** la partie inférieure chauffe-plat (1) peut être recouverte d'une partie supérieure chauffe-plat (7) correspondante pouvant être reliée par un joint de collage.

9. Dispositif selon la revendication 8, **caractérisé en ce que** la partie supérieure de chauffe-plat (7) se compose d'une demi-coque externe (11) et d'une demi-coque interne (12) avec un espace pouvant être rempli de matériau isolant entre la demi-coque externe et la demi-coque interne.

10. Dispositif selon l'une des revendications 8 à 9, **caractérisé en ce que** la face interne tournée vers l'assiette, de la partie supérieure de chauffe-plat (7) est munie d'une couche métallique.

11. Dispositif selon l'une des revendications 1 à 10, **caractérisé en ce que** la surface de pose de la partie inférieure se compose d'un anneau fermé placé sur la face inférieure de la partie inférieure de chauffe-plat.
